# EUROPÄISCHE PATENTSCHRIFT

(11) **EP 3 122 574 B1**
(45) Veröffentlichungstag und Bekanntmachung des Hinweises auf die Patenterteilung: **22.05.2019**
(21) Anmeldenummer: 15700702.2
(22) Anmeldetag: 20.01.2015
(51) Int. Cl.: B60C 11/12, B60C 11/11, B60C 11/13, B60C 11/03

(54) **FAHRZEUGLUFTREIFEN**
VEHICLE TIRE
PNEU DE VEHICULE

(30) Priorität: 26.03.2014 DE 102014205595
(43) Veröffentlichungstag der Anmeldung: 01.02.2017
(73) Patentinhaber: Continental Reifen Deutschland GmbH, 30165 Hannover (DE)
(72) Erfinder: KRISTEN, Florian, 30171 Hannover (DE); WÜST, Alexander, 30926 Seelze (DE)
(74) Vertreter: Finger, Karsten
(86) Internationale Anmeldenummer: PCT/EP2015/050916
(87) Internationale Veröffentlichungsnummer: WO 2015/144322

(56) Entgegenhaltungen:
- EP-A1- 0 125 437
- EP-A1- 2 671 710
- WO-A1-2012/164449
- JP-A- 2008 213 673

## Beschreibung

Die Erfindung betrifft ein Laufstreifenprofil eines Fahrzeugluftreifens - insbesondere eines Nutzfahrzeugluftreifens - mit wenigstens einer Profilblockreihe, welche in axialer Richtung A des Reifens durch zwei Umfangsrillen begrenzt und in Umfangsrichtung U des Reifens aus hintereinander angeordneten und jeweils durch Querrillen von einander beabstandeten Profilblockelementen ausgebildet ist, wobei die Profilblockelemente in radialer Richtung R nach außen hin durch eine die Bodenkontaktfläche bildende radial äußere Oberfläche begrenzt ist, wobei ein Profilblockelement zwischen zwei in Umfangsrichtung U benachbarten Querrillen angeordnet und durch diese in Umfangsrichtung U des Reifens begrenzt ist, wobei in der radial äußeren Oberfläche des Profilblockelementes jeweils wenigstens ein quer verlaufender Feineinschnitt ausgebildet ist, wobei der Feineinschnitt in radialer Richtung R nach innen hin jeweils durch einen Feineinschnittsgrund und jede der beiden Querrillen in radialer Richtung R nach innen hin jeweils durch einen Rillengrund begrenzt ist.

Derartige Fahrzeugluftreifen sind z.B. aus der JP 2008 213673 A bekannt. Bei Nutzfahrzeugluftreifen ist es bekannt, das Laufstreifenprofil mit über den Umfang des Fahrzeugluftreifens erstreckten Profilbändern auszubilden, welche in axialer Richtung A des Reifens jeweils durch Umfangsrillen voneinander beabstandet sind. Die Profilbänder sind dabei entweder Umfangsrippen, welche sich über den gesamten Umfang des Fahrzeugluftreifens erstrecken, oder Profilblockreihen, welche sich über den gesamten Umfang des Fahrzeugluftreifens erstrecken und aus über den Umfang des Fahrzeugluftreifens hinweg verteilt angeordneten und jeweils durch Querrillen voneinander getrennten Profilblockelementen ausgebildet sind. Die Profilblockelemente sind an ihrer in radialer Richtung R nach außen hin durch eine die Bodenkontaktoberfläche bildende radial äußere Oberfläche begrenzt. Dabei ist es bekannt in den Profilblockelementen der Nutzfahrzeugreifen in der radial äußeren Oberfläche zusätzliche Feineinschnitte auszubilden, welche sich von Umfangsrille zu Umfangsrille durch die Profilblockelemente hindurch erstrecken. Die Feineinschnitte und die Querrillen bilden in der radial äußeren Oberfläche Griffkanten zur Erzielung guter Nassgriffeigenschaften. Die Querrillen dienen darüber hinaus der Aufnahme und der Abführung von Wasser aus dem Erstreckungsbereich der Profilblockreihe. Dabei ist es auch bekannt, die Feineinschnitte zickzack- oder wellenförmig auszubilden. Die wellen- oder zickzackförmigen Feineinschnitte bei Nutzfahrzeugreifen sind dabei längs der gesamten radialen Erstreckung ausgehend von der radial äußeren Oberfläche bis zu dem den Feineinschnitt in radialer Richtung nach innen hin begrenzenden Feineinschnittgrunds längs ihrer Haupterstreckung des Feineinschnitts von Umfangsrille zu Umfangsrille jeweils mit einem zickzack- oder wellenförmigen Verlauf ausgebildet. Durch die Zickzack- oder Wellenform kann die wirksame Griffkante verlängert werden. Die Zickzack- oder Wellenform bei derartigen Feineinschnitten kann bei Nutzfahrzeugreifen jedoch die Möglichkeit einer Rissbildung im Feineinschnittsgrund begünstigen. Daher ist es wünschenswert, die Amplitude längs der radialen Erstreckung ausgehend von der radial äußeren Oberfläche zum Feineinschnittsgrund hin zu reduzieren und den Feineinschnittsgrund möglichst geradlinig auszubilden. Dies führt jedoch zur Abnahme der Traktion über die Lebensdauer des Nutzfahrzeugreifens aufgrund der Reduktion der wirksamen Griffkanten.

Von Winterreifen für Personenkraftwagen (Pkw) ist es bekannt, Profilblockelemente mit einer Vielzahl von Feineinschnitten zu versehen, die sich von einer ein Profilblockelement begrenzenden Umfangsrille zur anderen das Profilblockelement begrenzenden Umfangsrille hin erstrecken und die längs ihrer Haupterstreckungsrichtung von der einen Umfangsrille zur anderen Umfangsrille hin jeweils wellen- oder zickzackförmig ausgebildet sind. Dabei ist es beispielsweise aus der DE 101 01 507 A1 auch bekannt, die Amplituden des wellen- oder zickzackförmigen Verlaufes von der radial äußeren Oberfläche ausgehend bis zum Feineinschnittsgrund hin verändert auszubilden.

Der Erfindung liegt die Aufgabe zugrunde, ein derartiges Laufstreifenprofil insbesondere eines Nutzfahrzeugluftreifens zu schaffen, bei dem die Rissbildung im Feineinschnittsgrund reduziert und dennoch über die Lebendauer eine hohe Traktionsfähigkeit sicher ermöglicht wird.

Die Aufgabe wird erfindungsgemäß durch die Ausbildung eines Laufstreifenprofils eines Fahrzeugluftreifens - insbesondere eines Nutzfahrzeugluftreifens - mit wenigstens einer Profilblockreihe, welche in axialer Richtung A des Reifens durch zwei Umfangsrillen begrenzt und in Umfangsrichtung U des Reifens aus hintereinander angeordneten und jeweils durch Querrillen von einander beabstandeten Profilblockelementen ausgebildet ist, wobei die Profilblockelemente in radialer Richtung R nach außen hin durch eine die Bodenkontaktfläche bildende, radial äußere Oberfläche begrenzt ist, wobei ein Profilblockelement zwischen zwei in Umfangsrichtung U benachbarten Querrillen angeordnet und durch diese in Umfangsrichtung U des Reifens begrenzt ist, wobei in der radial äußeren Oberfläche des Profilblockelementes jeweils wenigstens ein quer verlaufender Feineinschnitt ausgebildet ist, wobei der Feineinschnitt in radialer Richtung R nach innen hin jeweils durch einen Feineinschnittsgrund und jede der beiden Querrillen in radialer Richtung R nach innen hin jeweils durch einen Rillengrund begrenzt ist, gemäß den Merkmalen von Anspruch 1 gelöst, bei dem die beiden Querrillen längs ihrer Haupterstreckungsrichtung von Umfangsrille zu Umfangsrille zumindest in einem Abschnitt c_{Q} ihrer Erstreckung jeweils einen zickzackförmigen oder wellenförmigen Verlauf aufweisen, wobei die Amplitude A_{Q} der Zickzack- oder Wellenform im Rillengrund ihr Maximum aufweist und ausgehend vom Rillengrund längs der radialen Erstreckung R nach außen hin bis zur radial äußeren Oberfläche stetig abnimmt, und dass wenigstens ein querverlaufender Feineinschnitt des Profilblockelementes zumindest in einem Abschnitt c_{F} seiner Erstreckung längs seiner Haupterstreckungsrichtung von Umfangsrille zu Umfangsrille einen zickzackförmigen oder wellenförmigen Verlauf aufweist, wobei die Amplitude A_{F} der Zickzack- oder Wellenform in der radial äußeren Oberfläche ihr Maximum aufweist und ausgehend von der radial äußeren Oberfläche längs der radialen Erstreckung R nach innen hin stetig abnimmt.

Durch diese Ausbildung wird es ermöglicht, dass die bei Nutzfahrzeugreifen gewünschte erhöhte Kantenlänge im Neuzustand des Nutzfahrzeugluftreifens - wie angestrebt - durch die Zickzack oder Wellenform des Feineinschnittes im Profilblockelement erzeugt wird und aufgrund des wirksamen Abriebes des Laufstreifenprofils mit zunehmender Lebensdauer sich dieser kantenverlängernde Einfluss des Feineinschnitts entsprechend der abnehmenden Amplitude reduziert. Mit der Abnahme des kantenverlängernden Einflusses des Feineinschnittes wird jedoch im Bereich der Querrille über die zunehmende Lebensdauer aufgrund des Abriebes eine zunehmende wirksame Kantenlänge geschaffen. Diese zunehmende Griffwirkung im Bereich der Querrille wirkt der abnehmenden Griffwirkung des Feineinschnittes entgegen, wodurch die gesamte Griffwirkung im Bereich der Profilblockreihe über die Lebensdauer des Reifens weitgehend gesichert werden kann. Somit kann eine hohe Traktion über die Lebensdauer des Reifens trotz Reduktion der Griffkanten im Bereich der Feineinschnitte gesichert werden. Die Rissbildungsgefahr im Grund der Feineinschnitte kann minimiert werde. Im Bereich der Querrillen wird durch die Zickzackform im Rillengrund aufgrund der deutlich größeren Dimensionierung der Rillenbreite gegenüber den Feineinschnittsbereiten die Rissbildungsgefahr nicht nennenswert erhöht. Somit kann ein Nutzfahrzeugreifenprofil mit einer Profilblockreihe ermöglicht werden, bei der die gewünschte Wasseraufnahme und Abfuhr über Querrillen möglich, hohe Griffwirkung in Umfangs- und Querrichtung und somit auch hohe Traktionsfähigkeit über die Lebensdauer gesichert werden kann bei deutlich reduziertem Rissbildungsrisiko im Bereich der Feineinschnitte. Darüber hinaus kann durch die Zickzackform oder Wellenform der Querrille mit ihrem vom Rillengrund in radialer Richtung nach außen hin abnehmenden Amplituden zusätzlich das Einfangen von Steinen behindert und Steinauswurf verbessert werden.

Besonders vorteilhaft zur Vermeidung von Rissbildung im Feineinschnittsgrund ist die Ausbildung eines Laufstreifenprofils gemäß den Merkmalen von Anspruch 2, wobei die Amplitude A_{F} der Zickzack- oder Wellenform des Feineinschnitts in Feineinschnittsgrund mit A_{F} =0 mm ausgebildet ist.

Besonders vorteilhaft ist die Ausbildung eines Laufstreifenprofils gemäß den Merkmalen von Anspruch 3, wobei die Amplitude A_{Q} der Zickzack- oder Wellenform der Querrille in der der radial äußeren Oberfläche mit A_{Q} =0 mm ausgebildet ist. Dies begünstigt eine hohe Steifigkeit des Profilblocks und gute Steinauswurfeigenschaften der Rille.

Besonders vorteilhaft ist die Ausbildung eines Laufstreifenprofils gemäß den Merkmalen von Anspruch 4, wobei die Amplitude A_{F} der Zickzack- oder Wellenform des Feineinschnitts ausgehend von der radial äußeren Oberfläche längs der radialen Erstreckung R nach innen hin bis zu ihrem Minimum kontinuierlich abnimmt. Dies ermöglicht eine besonders große laterale Kante für guten Nassgriff am neuen Reifen unter Vermeidung des Steinefangens.

Besonders vorteilhaft ist die Ausbildung eines Laufstreifenprofils gemäß den Merkmalen von Anspruch 5, wobei die Amplitude A_{Q} der Zickzack- oder Wellenform der Querrille ausgehend vom Rillengrund längs der radialen Erstreckung R nach außen hin bis zu ihrem Minimum kontinuierlich abnimmt. Dies ermöglicht eine optimale Verlängerung der Aufrechterhaltung großer lateraler Griffkanten und somit hoher Nassgriffeigenschaften über die Lebenszeit des Reifens hinweg.

Besonders vorteilhaft ist die Ausbildung eines Laufstreifenprofils gemäß den Merkmalen von Anspruch 6, wobei wenigstens eine - insbesondere beide - der beiden das Profilblockelement begrenzenden Querrillen und der in der radial äußeren Oberfläche des Profilblockelementes ausgebildete Feineinschnitt mit der Haupterstreckungsrichtung ihres in der radial äußeren Oberfläche ausgebildeten Haupterstreckungsverlaufes parallel zueinander ausgerichtet sind. Hierdurch kann ungleichmäßiger Abrieb reduziert werden. Durch die parallele Ausbildung beider Querrillen kann eine gleichbleibende Klotzlänge und eine gleichmäßige Steifigkeit ermöglicht werden, wodurch ungleichmäßiger Abrieb optimal vermieden werden kann.

Besonders vorteilhaft ist die Ausbildung eines Laufstreifenprofils gemäß den Merkmalen von Anspruch 7, wobei die das Profilblockelement begrenzenden Querrillen und der Feineinschnitt in der radial äußeren Oberfläche jeweils mit einem unter Einschluss eines Neigungswinkels α zur axialen Richtung A des Reifens ausgerichteten Haupterstreckungsverlauf ausgebildet mit 20°≤α≤45°, insbesondere mit α = 30°. Dies ermöglicht eine Reduktion der Geräuschentstehung beim Abrollen. Darüber kann hierdurch eine optimierte Mischung aus langen wirksamen lateralen und in Umfangsrichtung gerichteten Griffkanten umgesetzt werden, wodurch verbesserter Nassgriff bei gutem Rollwiderstand einfach ermöglicht wird.

Besonders vorteilhaft ist die Ausbildung eines Laufstreifenprofils gemäß den Merkmalen von Anspruch 8, wobei die Erstreckungslänge c_{Q} mit (0,98a_{Q}) ≤ c_{Q} ≤ a_{Q} - insbesondere mit c_{Q} = a_{Q} - ausgebildet ist, wobei a_{Q} längs der Haupterstreckungsrichtung der Querrille gemessene maximale Erstreckungslänge der Querrille ist, und wobei die Erstreckungslänge c_{F} mit (0,98a_{F}) ≤ c_{F} ≤ a_{F} - insbesondere mit c_{F} = a_{F} - ausgebildet ist, wobei a_{Q} längs der Haupterstreckungsrichtung des Feineinschnitts gemessene maximale Erstreckungslänge des Feineinschnitts ist. Dies ermöglicht zusätzlich eine einfache Produzierbarkeit der Reifenheizformen.

Besonders vorteilhaft ist die Ausbildung eines Laufstreifenprofils gemäß den Merkmalen von Anspruch 9, wobei die Wellen- oder Zickzackform der Querrillen mit in Haupterstreckungsrichtung ausgerichteter - insbesondere geradlinig erstreckter-Nulldurchgangslinie ihres wellen- oder zickzackförmigen Verlaufs ausgebildet ist, wobei die Wellen- oder Zickzackform in Bezug auf die Nulldurchgangslinie längs der Haupterstreckung alternierend ausgebildete Berge und Täler definiert, mit der Amplitude A_{Q}, welche den Abstand der Extremwerte der Wellen- oder Zickzackform von der ersten Nulldurchgangslinie bildet, wobei die in Haupterstreckungsrichtung in zwei hintereinander ausgebildete Bergen ausgebildeten Extremwerte und die in Haupterstreckungsrichtung in zwei hintereinander ausgebildete Tälern ausgebildeten Extremwerten jeweils im Abstand der Länge L_{Q} mit 5mm ≤ L_{Q} ≤ 15mm von einander ausgebildet sind, und wobei die Wellen- oder Zickzackform des Feineinschnitts mit in Haupterstreckungsrichtung ausgerichteter - insbesondere geradlinig erstreckter-Nulldurchgangslinie seines wellen- oder zickzackförmigen Verlaufs ausgebildet ist, wobei die Wellen- oder Zickzackform in Bezug auf die Nulldurchgangslinie längs der Haupterstreckung alternierend ausgebildete Berge und Täler definiert, mit der Amplitude A_{F}, welche den Abstand der Extremwerte der Wellen- oder Zickzackform von der ersten Nulldurchgangslinie bildet, wobei die in Haupterstreckungsrichtung in zwei hintereinander ausgebildete Bergen ausgebildeten Extremwerte und die in Haupterstreckungsrichtung in zwei hintereinander ausgebildete Tälern ausgebildeten Extremwerten jeweils im Abstand der Länge L_{F} mit 5mm ≤ L_{F} ≤ 15mm von einander ausgebildet sind. Hierdurch kann in einfacher Weise bei einfacher Produzierbarkeit die Wirksamkeit der wellenförmig oder zickzackförmigen Ausbildung von Feineinschnitt und Querrille mit ihren sich über die radiale Erstreckung verändernden Amplituden sichergestellt werden. Darüber hinaus kann eine ausreichende Steinauswurfswirkung der Querrillen sicher umgesetzt werden.

Besonders vorteilhaft ist die Ausbildung eines Laufstreifenprofils gemäß den Merkmalen von Anspruch 10, wobei die Amplitude A_{F} des Feineinschnitts in der radial äußeren Oberfläche mit 1,5mm ≤ A_{F} ≤ 8mm ausgebildet ist. Hierdurch kann in einfacher Weise ein optimaler Kompromiss aus großer wirksamer Kantenlänge in Querrichtung für optimalen Nassgriff des Feineinschnittes bei einfacher Produzierbarkeit umgesetzt werden.

Besonders vorteilhaft ist die Ausbildung eines Laufstreifenprofils gemäß den Merkmalen von Anspruch 11, wobei die Amplitude A_{Q} der Querrille im Rillengrund mit 2mm ≤ A_{Q} ≤ 6mm ausgebildet ist. Hierdurch kann in einfacher Weise ein optimaler Kompromiss aus großer wirksamer Kantenlänge in Querrichtung für optimalen Nassgriff über die Lebensdauer bei einfacher Produzierbarkeit und guter Steinauswurfwirkung umgesetzt werden.

Die Erfindung wird im Folgenden an Hand der in den Figuren 1 bis 9 dargestellten Ausführungsbeispiele näher erläutert. Hierin zeigen
- Fig. 1: eine Draufsicht auf einen Ausschnitt eines Laufstreifenprofils eines Nutzfahrzeugreifens,
- Fig. 2: eine Draufsicht auf einen Umfangsabschnitt einer Profilblockreihe eines Nutzfahrzeugreifens,
- Fig. 3: die Profilblockreihe von Fig.2 in Schnittdarstellung gemäß Schnitt III-III von Fig.2,
- Fig. 4: die Profilblockreihe von Fig.2 gemäß Schnitt IV-IV von Fig.2,
- Fig. 5: die Profilblockreihe von Fig.2 in Schnittdarstellung gemäß Schnitt V-V von Fig.2,
- Fig. 6: die Profilblockreihe von Fig.2 in Schnittdarstellung gemäß Schnitt VI-VI von Fig.2,
- Fig. 7: die Draufsicht auf einen Ausschnitt der Profilblockreihe von Fig.2 gemäß Schnitt VII-VII der Figuren 4 bis 6 zur Erläuterung der veränderten Amplituden,
- Fig. 8: die Draufsicht auf die Profilblockreihe von Fig.7 analog der Schnittdarstellung gemäß Schnitt VIII-VIII der Figuren 5 bis 6 zur Erläuterung der Veränderung der Amplituden und
- Fig. 9: die Draufsicht auf die Profilblockreihe von Fig.7 im abgefahrenen Zustand analog zur Schnittdarstellung gemäß Schnitt IX-IX der Figuren 3 bis 6.

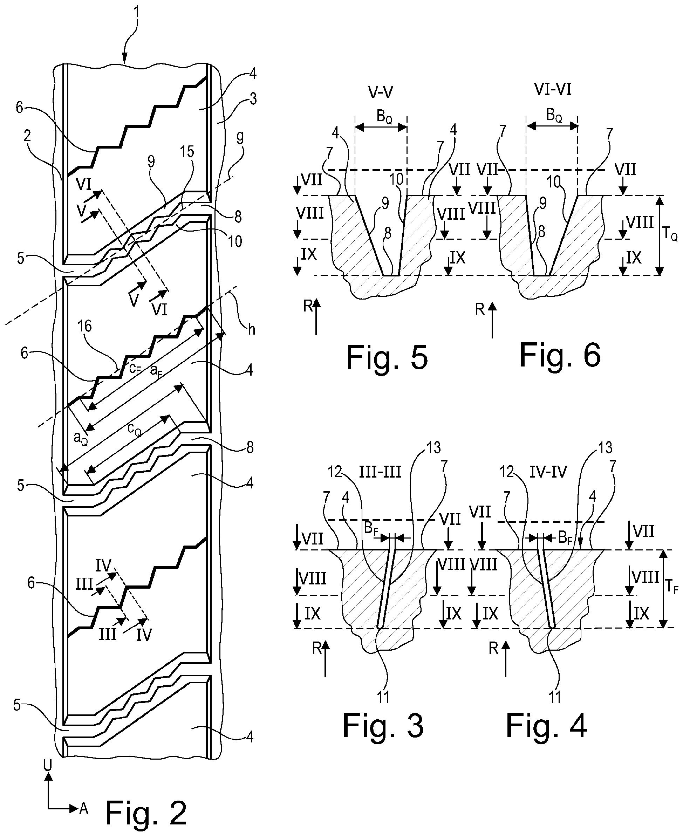

Die Figuren 2 bis 9 zeigen eine Profilblockreihe 1 eines Nutzfahrzeugreifens, die in Umfangsrichtung U des Fahrzeugluftreifens ausgerichtet und über den gesamten Umfang des Fahrzeugluftreifens erstreckt ausgebildet ist. Die Profilblockreihe 1 ist in axialer Richtung A des Fahrzeugluftreifens zur einen Seite hin durch eine über den gesamten Umfang des Fahrzeugluftreifens erstreckte und in Umfangsrichtung U ausgerichtete Umfangsrille 2 bekannter Art begrenzt. Die Profilblockreihe 1 ist in axialer Richtung A des Fahrzeugluftreifens zur anderen Seite hin durch eine über den gesamten Umfang des Fahrzeugluftreifens erstreckte und in Umfangsrichtung U ausgerichtete Umfangsrille 3 begrenzt. Die Profilblockreihe 1 ist in bekannter Weise aus einer Vielzahl von in Umfangsrichtung U des Fahrzeugluftreifens hintereinander angeordneten und jeweils durch Querrillen 5 in Umfangsrichtung U voneinander beabstandeten Profilblockelementen 4 bekannter Art ausgebildet. Jedes der Profilblockelemente 4 ist somit in Umfangsrichtung U des Fahrzeugluftreifens in beide Richtungen hin durch jeweils eine Querrille 5 begrenzt, welche sich in axialer Richtung A des Fahrzeugluftreifens ausgehend von der Umfangsrille 2 durch die Profilblockreihe 1 hindurch bis zur Umfangsrille 3 erstreckt und in diese mündet.

Die Profilblockelemente 4 sind in radialer Richtung R des Fahrzeugluftreifens nach außen hin jeweils durch eine die Bodenkontaktoberflächen bildende radial äußere Oberfläche 7 begrenzt. Die Querrille 5 ist in radialer Richtung R nach innen hin mit einem ausgehend von der Umfangsrille 2 bis zur Umfangsrille 3 hin erstreckten Rillengrund 8 begrenzt. Längs der Haupterstreckung der Querrille 5 von Umfangsrille 2 zu Umfangsrille 3 ist die Querrille 5 beiderseits des Rillengrundes 8 jeweils durch Rillenwände 9 und 10 begrenzt. Die Rillenwand 9 begrenzt die Querrille 5 in Umfangsrichtung U zur einen Seite hin und bildet dabei eine Profilblockelementflanke des zu dieser Seite hin an die Querrille 5 angrenzenden Profilblockelementes 4. Die Rillenwand 10 begrenzt die Querrille 5 in Umfangsrichtung zur anderen Seite hin und bildet dabei eine Profilblockelementflanke des zu dieser Seite hin an die Querrille 5 angrenzenden Profilblockelementes 4. Die Rillenwand 9 und die Rillenwand 10 erstrecken sich dabei in radialer Richtung R des Fahrzeugluftreifens ausgehend von der Position des Rillengrundes 8 nach außen bis zur radial äußeren Oberfläche 7 des durch die jeweilige Rillenwand 9 bzw. 10 begrenzten Profilblockelementes 4.

Die Querrille 5 erstreckt sich dabei mit ihrer Haupterstreckungsrichtung ausgehend von der Umfangsrille 2 bis zur Umfangsrille 3 längs einer Geraden g, wobei die Gerade g unter Einschluss eines Neigungswinkel α zur Axialen A ausgerichtet ist. Die in Erstreckungsrichtung der Geraden g gemessene Erstreckungslänge a_{Q} der Querrille 5 gemessen wird in der radial äußeren Oberfläche 7 gemessen. Dabei ist die Querrille 5 in ihrem mittleren zentralen Haupterstreckungsabschnitt der Erstreckungslänge c_{Q} in der radial äußeren Oberfläche 7 geradlinig in Erstreckungsrichtung g erstreckt mit einer senkrecht zur Erstreckungsrichtung der Geraden g gemessenen Breite B_{Q} ausgebildet. Der Rillengrund 8 ist längs der Erstreckungslänge c_{Q} dieses mittleren zentralen Abschnitts längs der Geraden g zickzackförmig erstreckt verlaufend ausgebildet.

Der zentrale Erstreckungsabschnitt der Länge c_{Q} ist mit a_{Q} 2: c_{Q} ≥ 0,75a_{Q} ausgebildet. Im dargestellten Ausführungsbeispiel ist c_{Q} = 0,8 a_{Q} gewählt.

In Auführungen, die eine einfache Produzierbarkeit der Heizform erfordern, ist der zentrale Erstreckungsabschnitt der Länge c_{Q} ist mit a_{Q} ≥ c_{Q} ≥ 0,98a_{Q} -beispielweise mit c_{Q} = 0,99 a_{Q} - ausgebildet.

Der Winkel α ist mit 20° ≤ α ≤ 45° ausgebildet. Im dargestellten Ausführungsbeispiel ist α = 30° ausgebildet.

Die Mittellinie m des Rillengrundes 5 erstreckt sich im mittleren zentralen Haupterstreckungsabschnitt zickzackförmig längs der Gerade g verlaufend um eine parallel zur Geraden g verlaufende Nulldurchgangslinie. Ebenso erstreckt sich im Rillengrund 8 parallel zur Mittellinie des Rillengrundes 5 mit zickzackförmigem Verlauf die Rillenwand 9 um eine parallel zur Geraden g verlaufende Nulldurchgangslinie. Ebenso erstreckt sich im Rillengrund 8 parallel zur Mittellinie des Rillengrundes 5 mit zickzackförmigem Verlauf die Rillenwand 10 um eine parallel zur Geraden g verlaufende Nulldurchgangslinie.

Der im weiteren beschriebene zickzackförmige Verlauf der Rille im Rillengrund 8 kann somit durch den Erstreckungsverlauf der Mittellinie des Rillengrundes 8 gezeichnet und beschrieben werden. Durch den parallelen Verlauf der Schnittkontur zwischen Rillenwand 9 und Rillengrund 8 und der Schnittkontur zwischen Rillenwand 10 und Rillengrund 8 gibt auch die Schnittkontur der Rillenwand 9 im Rillengrund 8 ebenso wie die Schnittkontur der Rillenwand 10 mit dem Rillengrund 8 den Verlauf der Rille im Rillengrund wieder.

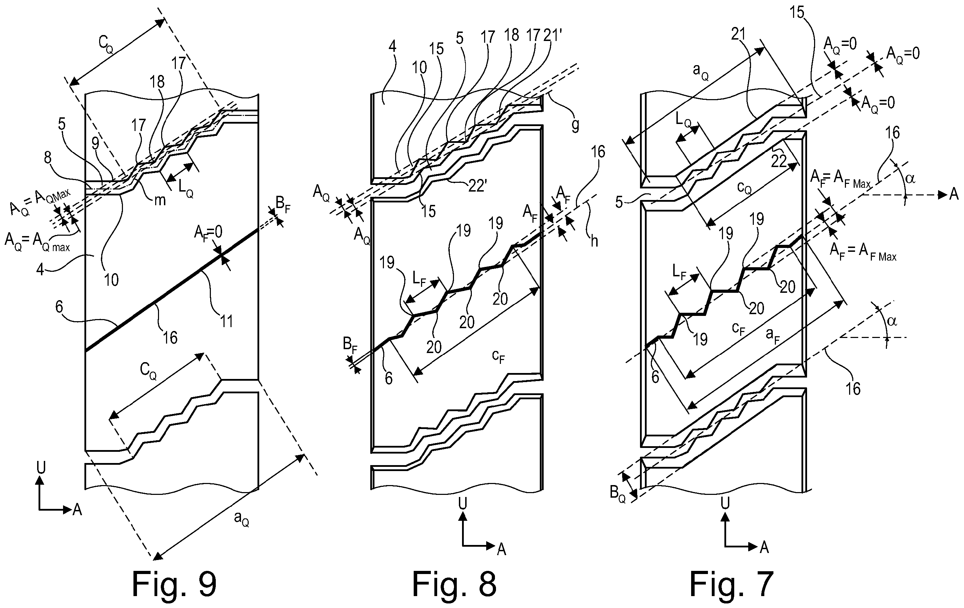

Zur Vereinfachung ist in Figur 9 der Schnittverlauf anhand der Schnittkontur der Rillenwand 9 mit dem Rillengrund 8 dargestellt. Dabei ist erkennbar, dass der Verlauf der Querrille längs der parallel zur Geraden g gebildeten Nulldurchgangslinie 15 mit längs der Erstreckung der Querrille in alternierender Abfolge angeordneten Maximalwerten 17 und Minimalwerten 18 ausgebildet ist. Die Maximalwerte 17 bilden die Amplitude A_{Q}, welche den Abstand des Abstand des Maximalwerts 17 zur Nulldurchgangslinie 15 sowie den Abstand des Minimums zur Nulldurchgangslinie 15 bildet. Die Wellenlänge, welche den Abstand zwischen zwei hintereinander angeordneten Maximalwerten 17 bzw. den Abstand zwischen zwei hintereinander angeordneten Minimalwerten 18 angibt, ist mit L_{Q} angegeben.

Wie in den Figuren 2, 5, 6, 7, 8 und 9 dargestellt, ist die Querrille 5 innerhalb des Erstreckungsabschnitts c_{Q} längs ihrer gesamten radialen Erstreckung ausgehend vom Rillengrund 8 bis zur radial äußeren Oberfläche 7 in allen radialen Positionen jeweils mit einem in Haupterstreckungsrichtung längs der Erstreckung der Querrille 5 ausgebildeten zickzackförmigen Erstreckungsverlauf der Wellenlänge L_{Q} und mit Amplituden A_{Q} ausgebildet. Dabei nimmt ausgehend vom Rillengrund 8 in radialer Richtung R des Fahrzeugluftreifens nach außen hin bis zur radial äußeren Oberfläche 7 die Amplitude A_{Q} des zickzackförmigen Verlaufes kontinuierlich ab. Die Amplitude A_{Q} weist somit im Rillengrund 8 ihr Maximum A_{Q} = A_{Qmax} und in der radial äußeren Oberfläche 7 ihr Minimum mit A_{Q} = 0 auf.

Im Übergangsbereich zwischen dem mittleren Erstreckungsabschnitt der Erstreckungslänge c_{Q} und der Umfangsrille 2 bzw. zwischen dem mittleren Erstreckungsabschnitt der Erstreckungslänge c_{Q} und der Umfangsrille 3 ist die Querrille 5 in axialer Richtung A erstreckt ausgebildet und in allen radialen Positionen jeweils längs ihrer Haupterstreckungsrichtung geradlinig erstreckt ausgebildet.

Die Querrille 5 ist mit einer ausgehend von der radial äußeren Oberfläche 7 bis zum Rillengrund 8 in radialer Richtung gemessenen Tiefe T_{Q} mit 5mm ≤ T_{Q} ≤ 20mm ausgebildet. Beispielsweise ist T_{Q} = 12mm gewählt.

Die Amplitude A_{Q} ist mit 1mm ≤ A_{Q} ≤ 3mm ausgebildet. Die Wellenlänge L_{Q} ist mit 5mm ≤ L_{Q} ≤ 15mm ausgebildet.

Die Rillenbreite B gemessen in der radial äußeren Oberfläche ist mit 8mm ≤ B ≤ 20mm ausgebildet. Im dargestellten Ausführungsbeispiel ist B = 10mm gewählt. Die maximale Erstreckungslänge eines Profilblockelementes 4 - gemessen in der radial äußeren Oberfläche in Umfangsrichtung U des Reifens - ist zwischen 50mm und 100mm gewählt.

In der radial äußeren Oberfläche 7 eines Profilblockelementes 4 ist jeweils mittig zwischen den beiden das Profilblockelement 4 begrenzenden Querrillen 5 ein Feineinschnitt 6 ausgebildet. Der Feineinschnitt 6 erstreckt sich ausgehend von der Umfangsrille 2 bis zur Umfangsrille 3. In der radial äußeren Oberfläche 7 ist der Feineinschnitt 6 längs einer Geraden h erstreckt ausgebildet. Die Gerade h ist unter Einschluss eines Neigungswinkel α zur Axialen Richtung A des Reifens und parallel zur Geraden g der das Profilblockelement begrenzenden Querrillen 5 ausgerichtet. Der Feineinschnitt 6 ist längs seiner Erstreckung in der radial äußeren Oberfläche 7 mit einer Erstreckungslänge a_{F} ausgebildet. Längs seines zentralen, mittleren Haupterstreckungsabschnitts der Erstreckungslänge c_{F} ist der Feinschnitt 6 in der radial äußeren Oberfläche mit einem um eine Nulldurchgangslinie 16 zickzackförmig erstreckten Verlauf ausgebildet. Die Nulldurchgangslinie 16 ist parallel zur Geraden h ausgerichtet. Wie in den Figuren 2 und 7 dargestellt ist, ist der Feineinschnitt 6 in dem Erstreckungsabschnitt der Länge c_{F} mit in alternierender Anordnung hintereinander angeordneten Maximalwerten 19 und Minimalwerten 20 zickzackförmig um die Nulldurchgangslinie 16 erstreckt ausgebildet. Der zickzackförmige Verlauf ist dabei mit einer "Wellenlänge" L_{F} ausgebildet, welche jeweils den Abstand zwischen zwei in Erstreckungsrichtung des Feineinschnittes 6 hintereinander angeordneten Maximalwerten 19 und den Abstand zwischen zwei in Erstreckungsrichtung hintereinander angeordneten Minimalwerten 20 bildet. Die Zickzackform des Verlauf des Feineinschnitts 16 in der radial äußeren Oberfläche 7 ist dabei mit einer Amplitude A_{F} ausgebildet, welche dem Abstand der Maximalwerte 19 von der Nulldurchgangslinie 16 und den Abstand zwischen den Minimalwerten 20 von der Nulldurchgangslinie 16 angibt.

Die Amplitude A_{F} in der radial äußeren Oberfläche ist dabei mit 1,5mm ≤ A_{F} ≤ 8mm ausgebildet. Beispielsweise ist A_{F} in der radial äußeren Oberfläche mit A_{F} = 2mm ausgebildet.

Im mittleren Erstreckungsabschnitt der Länge c_{F} ist - wie den Figuren 3, 4, 7, 8 und 9 zu entnehmen ist- der Erstreckungsverlauf des Feineinschnitts 6 in allen radialen Positionen zwischen radial äußerer Oberfläche 7 und Feineinschnittsgrund 11 in analoger zickzackförmiger Ausbildung ausgebildet, wobei die Amplitude A_{F} längs der radialen Erstreckung ausgehend von ihrem Maximalwert A_{F} = A_{Fmax} in der radial äußeren Oberfläche 7 bis zum Rillengrund 11 hin kontinuierlich abnimmt. Im Rillengrund 11 ist die Amplitude A_{F} = 0mm. Der Verlauf des Feineinschnittes 6 ist somit im Feineinschnittsgrund 11 geradlinig verlaufend ausgebildet.

Wie in den Figuren 2, 7 und 8 zu erkennen ist, ist der Feineinschnitt 6 axial beiderseits des Erstreckungsabschnitts c_{F} im Übergang zur jeweils angrenzenden Umfangsrille 2 bzw. 3 in allen radialen Positionen im Wesentlichen kollinear mit der in der jeweiligen radialen Position ausgebildeten Nulldurchgangslinie des zickzackförmigen Verlaufes des mittleren Erstreckungsabschnitts, geradlinig erstreckt in Erstreckungsrichtung der Geraden h ausgerichtet ausgebildet.

Die Erstreckungslänge c_{F} ist mit a_{F} ≥ c_{F} ≥ (0,75 a_{F}) ausgebildet. Im dargestellten Ausführungsbeispiel ist c_{F} = (0,8 a_{F}) ausgebildet.

In Auführungen, die eine einfache Produzierbarkeit der Heizform erfordern, ist die Erstreckungslänge c_{F} mit a_{F} ≥ c_{F} ≥ (0,98 a_{F}) - beispielsweise mit c_{F} = (0,99 a_{F} )-ausgebildet.

Der Feineinschnitt 6 ist längs seiner Erstreckung mit einer von der radial äußeren Oberfläche 7 bis zu seinem Feineinschnittsgrund 11 gemessenen Tiefe T_{F} mit 5mm ≤ T_{F} ≤ 20mm ausgebildet. Beispielsweise ist T_{F} mit T_{F} = 12mm ausgebildet. Im dargestellten Ausführungsbeispiel ist T_{F} =T_{Q} ausgebildet.

Im dargestellten Ausführungsbeispiel ist die maximale Amplitude A_{F} des Feineinschnitts 6 in der radial äußeren Oberfläche 7 gleichgroß ausgebildet wie die maximale Amplitude A_{Q} der das Profilblockelement 5 begrenzenden Querrillen 5 im Rillengrund 8.

Die Senkrecht zur Erstreckungsrichtung des Feineinschnitts 6 gemessene Breite B_{F} des Feineinschnitts 6 ist längs der gesamten Erstreckung des Feineinschnittes 6 und längs seiner radialen Erstreckung mit konstanter Größe ausgebildet. Die Breite B_{F} ist mit 0,8mm ≤ B_{F} ≤ 1,5mm ausgebildet. Beispielsweise ist B_{F} mit B_{F}= 1mm gewählt.

Die Breite B_{Q} der Querrillen 5 ist längs ihrer radialen Erstreckung ausgehend von der radial äußeren Oberfläche 7 bis zum Rillengrund 8 hin kontinuierlich abnehmend ausgebildet.

In Figur 7 ist deutlich zu erkennen, dass im Zustand des Neureifens der Feineinschnitt 6 mit der in radial äußeren Oberfläche 7 ausgebildeten maximalen Amplitude A_{F} des Zickzackverlaufes in Kontakt zur Straßenoberfläche kommt. Die Querrille 5 kommt jeweils mit ihren in der radial äußeren Oberfläche 7 im Abstand B_{Q} voneinander geradlinig erstreckt verlaufend ausgebildeten Schnittkanten 21 und 22, welche jeweils den Schnitt zwischen den Rillenwänden 9 und 10 einerseits und der radial äußeren Oberfläche 7 andererseits bilden, in Griffwirkung zur Straßenoberfläche. Fig. 8 zeigt den Zustand des nahezu zur Hälfte abgefahrenen Laufstreifenprofils. Dabei ist erkennbar, dass die Amplitude A_{F} der noch vorhandenen ZickZackform des Verlaufes des Feineinschnitts 6 in der nun wirksamen radial äußeren Oberfläche deutlich kleiner ist als die Amplitude A_{F} des in Figur 7 dargestellten Neuzustands. Darüber hinaus ist die Querrille 5 in dem in Fig. 8 dargestellten teilabgefahrenen Zustand an der dann wirksamen radial äußeren Oberfläche in dem Erstreckungsabschnitt c_{Q} bereits zickzackförmig verlaufend ausgebildet, wobei die zwischen den Rillenwänden 9 und 10 einerseits und der in diesem halb abgefahrenen Zustand wirksamen radial äußeren Oberfläche andererseits gebildeten Schnittkanten 21' und 22' jeweils einen zickzackförmigen Verlauf mit Amplituden A_{Q} aufweisen, die deutlich größer sind als die bei den noch geradlinigen erstreckten Schnittkonturlinien 20 und 21 von Fig. 7 in welchen die Amplitude A_{Q} = 0 ist.

Figur 9 zeigt den Verlauf des Feineinschnitts und der Querrille 5 im radialen Abstand T_{Q} von der radial äußeren Oberfläche 7 des Fahrzeugluftreifens im Neuzustand. Dabei ist zu erkennen, dass der Feineinschnittsgrund 11 geradlinig erstreckt mit Amplitude A_{F} = 0 ausgebildet ist. Der Rillengrund 8 und die Schnittkonturlinien 21" und 22" zwischen den Rillenwänden 9 und 10 einerseits und dem Rillengrund 8 andererseits ist im Erstreckungsabschnitt c_{Q} zickzackförmig erstreckt ausgebildet. Die Amplitude A_{Q} ist mit ihrem maximalen Wert A_{Qmax} ausgebildet. Wenn das Laufstreifenprofil soweit abgefahren ist, dass die radiale äußere Oberfläche somit nahezu den Rillengrund 8 bzw. den Feineinschnittsgrund 6 bildet, ist der Feineinschnitt 6 somit nahezu geradlinig verlaufend und die Rille mit Zickzackform mit maximaler Amplitude A_{Q} ihrer von Rillenwänden 9, 10 und radial äußerer Oberfläche gebildeten Griffkanten ausgebildet.

In einem nicht dargestellten Ausführungsbeispiel ist a_{Q} = c_{Q} und a_{F} = c_{F} ausgebildet.

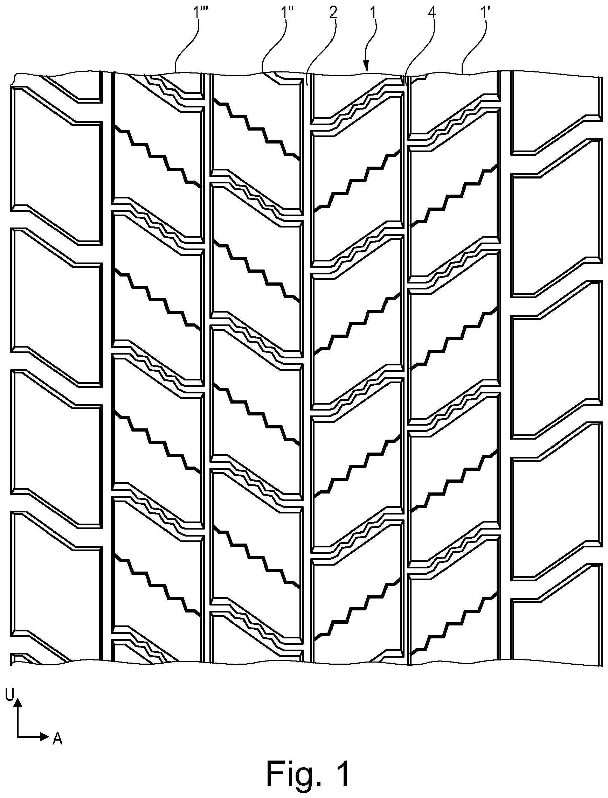

Figur 1 zeigt ein Laufstreifenprofil eines Nutzfahrzeugreifens mit mehreren in axialer Richtung A nebeneinander angeordneten Profilblockreihen 1, 1' 1", 1'". Die Profilblockreihen 1 und 1' sind wie in den Figuren 2 bis 9 dargestellt und hierzu erlaüutert ausgebildet. Die Profilblockreihen 1" und 1'" sind ebenfalls wie die in den Figuren 2 bis 9 dargestellten Profilblockreihen ausgebildet, wobei die Neigungsrichtung der Feineinschnitte und der Querrillen gegenläufig zur Neigungsrichtung der Feineinschnitte und der Querrillen der Profilblockreihen 1 und 1' gewählt ist.

In Figur 1 sind axial außerhalb der nebeneinander angeordneten Profilblockelementen 1, 1', 1" und 1'" zwei weitere Schulterprofilblockreihen bekannter Art ausgebildet.

In den oben dargestellten Ausführungsbeispielen ist der Verlauf der Feineinschnitte 6 und der Querrillen 5 in ihrem Abschnitt c_{Q} bzw. c_{F} jeweils zickzackförmig dargestellt. In alternativer, nicht dargestellter Ausführungsform ist dieser Verlauf in analoger Weise wellenförmig mit Amplitude A_{F} bzw. A_{Q} und Wellenlänge L_{F} bzw. L_{Q} ausgebildet.

### Bezugszeichenliste

### (Teil der Beschreibung)

- 1: Profilblockreihe
- 2: Umfangsrille
- 3: Umfangsrille
- 4: Profilblockelement
- 5: Querrille
- 6: Feineinschnitt
- 7: Radial äußere Oberfläche
- 8: Rillengrund
- 9: Rillenwand
- 10: Rillenwand
- 11: Feineinschnittsgrund
- 12: Feineinschnittswand
- 13: Feineinschnittswand
- 14 15: Nulldurchgangslinie
- 16: Nulldurchgangslinie
- 17: Maximum
- 18: Minimum
- 19: Maximum
- 20: Minimum
- 21: Schnittkante
- 22: Schnittkante

## Patentansprüche

1. Laufstreifenprofil eines Fahrzeugluftreifens - insbesondere eines Nutzfahrzeugluftreifens - mit wenigstens einer Profilblockreihe (1), welche in axialer Richtung A des Reifens durch zwei Umfangsrillen (2,3) begrenzt und in Umfangsrichtung U des Reifens aus hintereinander angeordneten und jeweils durch Querrillen (5) von einander beabstandeten Profilblockelementen (4) ausgebildet ist, wobei die Profilblockelemente (4) in radialer Richtung R nach außen hin durch eine die Bodenkontaktfläche bildende radial äußere Oberfläche (7) begrenzt ist, wobei ein Profilblockelement (4) zwischen zwei in Umfangsrichtung U benachbarten Querrillen (5) angeordnet und durch diese in Umfangsrichtung U des Reifens begrenzt ist, wobei in der radial äußeren Oberfläche (7) des Profilblockelementes (4) jeweils wenigstens ein quer verlaufender Feineinschnitt (6) ausgebildet ist, wobei der Feineinschnitt (6) in radialer Richtung R nach innen hin jeweils durch einen Feineinschnittsgrund (11) und jede der beiden Querrillen (5) in radialer Richtung R nach innen hin jeweils durch einen Rillengrund (8) begrenzt ist,
**dadurch gekennzeichnet,**
**dass** die beiden Querrillen (5) längs ihrer Haupterstreckungsrichtung von Umfangsrille (2) zu Umfangsrille (3) zumindest in einem Abschnitt (c_{Q}) ihrer Erstreckung einen zickzackförmigen oder wellenförmigen Verlauf aufweisen, wobei die Amplitude A_{Q} der Zickzack- oder Wellenform im Rillengrund (8) ihr Maximum aufweist und ausgehend vom Rillengrund (8) längs der radialen Erstreckung R nach außen hin bis zur radial äußeren Oberfläche (7) stetig abnimmt, und dass wenigstens ein querverlaufender Feineinschnitt (6) des Profilblockelementes (4) zumindest in einem Abschnitt (c_{F}) seiner Erstreckung längs seiner Haupterstreckungsrichtung von Umfangsrille (2) zu Umfangsrille (3) einen zickzackförmigen oder wellenförmigen Verlauf aufweist, wobei die Amplitude A_{F} der Zickzack- oder Wellenform in der radial äußeren Oberfläche (7) ihr Maximum aufweist und ausgehend von der radial äußeren Oberfläche (7) längs der radialen Erstreckung R nach innen hin stetig abnimmt.

2. Laufstreifenprofil gemäß den Merkmalen von Anspruch 1,
wobei die Amplitude A_{F} der Zickzack- oder Wellenform des Feineinschnitts (6) in Feineinschnittsgrund (11) mit A_{F} =0 mm ausgebildet ist.

3. Laufstreifenprofil gemäß den Merkmalen von Anspruch 1 oder 2,
wobei die Amplitude A_{Q} der Zickzack- oder Wellenform der Querrille (5) in der der radial äußeren Oberfläche (7) mit A_{Q} =0 mm ausgebildet ist.

4. Laufstreifenprofil gemäß den Merkmalen von einem der vorangegangenen Ansprüche,
wobei die Amplitude A_{F} der Zickzack- oder Wellenform des Feineinschnitts (6) ausgehend von der radial äußeren Oberfläche (7) längs der radialen Erstreckung R nach innen hin bis zu ihrem Minimum kontinuierlich abnimmt.

5. Laufstreifenprofil gemäß den Merkmalen von einem der vorangegangenen Ansprüche,
wobei wenigstens eine - insbesondere beide - der beiden das Profilblockelement (4) begrenzenden Querrillen (5) und der in der radial äußeren Oberfläche (7) des Profilblockelementes (4) ausgebildete Feineinschnitt (6) mit der Haupterstreckungsrichtung ihres in der radial äußeren Oberfläche (7) ausgebildeten Haupterstreckungsverlaufes (g,h) parallel zueinander ausgerichtet sind.

6. Laufstreifenprofil gemäß den Merkmalen von einem der vorangegangenen Ansprüche,
wobei die das Profilblockelement (4) begrenzenden Querrillen (5) und der Feineinschnitt (6) in der radial äußeren Oberfläche (7) jeweils mit einem unter Einschluss eines Neigungswinkels α zur axialen Richtung A des Reifens ausgerichteten Haupterstreckungsverlauf (g,h) ausgebildet mit 20°≤α≤ 45°, insbesondere mit α = 30° .

7. Laufstreifenprofil gemäß den Merkmalen von einem der vorangegangenen Ansprüche,
wobei die Erstreckungslänge c_{Q} des einen Abschnitts (c_{Q}) der Erstreckung der Umfangsrille mit (0,98a_{Q}) ≤ c_{Q} ≤ a_{Q} - insbesondere mit c_{Q} = a_{Q}-ausgebildet ist, wobei a_{Q} längs der Haupterstreckungsrichtung der Querrille (5) gemessene maximale Erstreckungslänge der Querrille (5) ist, und wobei die Erstreckungslänge c_{F} der Erstreckung des einen Abschnitts (c_{F}) der Erstreckung des Feineinschnitts mit (0,98a_{F}) ≤ c_{F} ≤ a_{F} - insbesondere mit c_{F} = a_{F} - ausgebildet ist, wobei a_{F} längs der Haupterstreckungsrichtung des Feineinschnitts (6) gemessene maximale Erstreckungslänge des Feineinschnitts (6) ist.

8. Laufstreifenprofil gemäß den Merkmalen von einem der vorangegangenen Ansprüche,
wobei die Wellen- oder Zickzackform der Querrillen (5) mit in Haupterstreckungsrichtung (g) ausgerichteter - insbesondere geradlinig erstreckter - Nulldurchgangslinie (15) ihres wellen- oder zickzackförmigen Verlaufs ausgebildet ist, wobei die Wellen- oder Zickzackform in Bezug auf die Nulldurchgangslinie (15) längs der Haupterstreckung alternierend ausgebildete Berge und Täler definiert, mit der Amplitude A_{Q}, welche den Abstand der Extremwerte (17, 18) der Wellen- oder Zickzackform von der ersten Nulldurchgangslinie (15) bildet, wobei die in Haupterstreckungsrichtung (g) in zwei hintereinander ausgebildete Bergen ausgebildeten Extremwerte (17) und die in Haupterstreckungsrichtung in zwei hintereinander ausgebildete Tälern ausgebildeten Extremwerten (18) jeweils im Abstand der Länge L_{Q} mit 5mm ≤ L_{Q} ≤ 15mm von einander ausgebildet sind, und
wobei die Wellen- oder Zickzackform des Feineinschnitts (6) mit in Haupterstreckungsrichtung ausgerichteter - insbesondere geradlinig erstreckter-Nulldurchgangslinie (16) seines wellen- oder zickzackförmigen Verlaufs ausgebildet ist, wobei die Wellen- oder Zickzackform in Bezug auf die Nulldurchgangslinie (16) längs der Haupterstreckung alternierend ausgebildete Berge und Täler definiert, mit der Amplitude A_{F}, welche den Abstand der Extremwerte (19,20) der Wellen- oder Zickzackform von der ersten Nulldurchgangslinie (16) bildet, wobei die in Haupterstreckungsrichtung (h) in zwei hintereinander ausgebildete Bergen ausgebildeten Extremwerte (19) und die in Haupterstreckungsrichtung (h) in zwei hintereinander ausgebildete Tälern ausgebildeten Extremwerten (20) jeweils im Abstand der Länge L_{F} mit 5mm ≤ L_{F} ≤ 15mm von einander ausgebildet sind.

9. Laufstreifenprofil gemäß den Merkmalen von einem der vorangegangenen Ansprüche,
wobei die Amplitude A_{F} des Feineinschnitts (6) in der radial äußeren Oberfläche (7) mit 1,5mm ≤ A_{F} ≤ 8mm ausgebildet ist.

10. Laufstreifenprofil gemäß den Merkmalen von einem der vorangegangenen Ansprüche,
wobei die Amplitude A_{Q} der Querrille (5) im Rillengrund (8) mit 2mm ≤ A_{Q} ≤ 6mm ausgebildet ist.

## Claims

1. Tread profile of a pneumatic vehicle tyre - in particular a commercial vehicle tyre - comprising at least one row of profile blocks (1), which is delimited in the axial direction A of the tyre by two circumferential grooves (2, 3) and is formed in the circumferential direction U of the tyre by profile block elements (4) arranged one behind the other and respectively spaced apart from one another by transverse grooves (5), wherein the profile block elements (4) are delimited outwardly in the radial direction R by a radially outer surface (7) forming the ground contact surface, wherein one profile block element (4) is arranged between two transverse grooves (5) that are adjacent in the circumferential direction U and is delimited by them in the circumferential direction U of the tyre, wherein at least one transversely running sipe (6) is respectively formed in the radial outer surface (7) of the profile block element (4), wherein the sipe (6) is delimited inwardly in the radial direction R respectively by a sipe base (11) and each of the two transverse grooves (5) is delimited inwardly in the radial direction R respectively by a groove base (8), **characterized**
**in that**, along their main direction of extent from circumferential groove (2) to circumferential groove (3), both transverse grooves (5) follow at least in a portion (c_{Q}) of their extent a zigzag- or wave-shaped path, wherein the amplitude A_{Q} of the zigzag or wave shape has its maximum in the groove base (8) and, starting from the groove base (8), steadily decreases outwards along the radial extent R to the radially outer surface (7), and in that, along its main direction of extent from circumferential groove (2) to circumferential groove (3), at least one transversely running sipe (6) of the profile block element (4) follows at least in a portion (c_{F}) of its extent a zigzag- or wave-shaped path, wherein the amplitude A_{F} of the zigzag or wave shape has its maximum in the radial outer surface (7) and, starting from the radially outer surface (7), steadily decreases inwards along the radial extent R.

2. Tread profile according to the features of Claim 1, wherein the amplitude A_{F} of the zigzag or wave shape of the sipe (6) in the sipe base (11) is formed with A_{F} = 0 mm.

3. Tread profile according to the features of Claim 1 or 2,
wherein the amplitude A_{Q} of the zigzag or wave shape of the transverse groove (5) in the radially outer surface (7) is formed with A_{Q} = 0 mm.

4. Tread profile according to the features of one of the preceding claims,
wherein, starting from the radially outer surface (7), the amplitude A_{F} of the zigzag or wave shape of the sipe (6) in the sipe base (11) continuously decreases inwards along the radial extent R to its minimum.

5. Tread profile according to the features of one of the preceding claims,
wherein at least one - in particular both - of the two transverse grooves (5) delimiting the profile block element (4) and the sipe (6) formed in the radially outer surface (7) of the profile block element (4) are aligned parallel to one another with the main direction of extent of their main path of extent (g, h) formed in the radially outer surface (7) .

6. Tread profile according to the features of one of the preceding claims,
wherein the transverse grooves (5) delimiting the profile block element (4) and the sipe (6) in the radially outer surface (7) are respectively formed with a main path of extent (g, h) while forming an angle of inclination α with the axial direction A of the tyre where 20° ≤ α ≤ 45°, in particular where α = 30°.

7. Tread profile according to the features of one of the preceding claims,
wherein the length of extent c_{Q} of the one portion (c_{Q}) of the extent of the circumferential groove is formed with (0.98 a_{Q}) ≤ c_{Q} ≤ a_{Q} - in particular with c_{Q} = a_{Q} - where a_{Q} is the maximum length of extent of the transverse groove (5) measured along the main direction of extent of the transverse groove (5), and where the length of extent c_{F} of the extent of the one portion (c_{F}) of the extent of the sipe is formed with (0.98 aF) ≤ c_{F} ≤ a_{F} - in particular with c_{F} = a_{F} - where a_{F} is the maximum length of extent of the sipe (6) measured along the main direction of extent of the sipe (6).

8. Tread profile according to the features of one of the preceding claims,
wherein the wave or zigzag shape of the transverse grooves (5) is formed with the zero crossing line (15) of its wave- or zigzag-shaped path aligned in the main direction of extent (g) - in particular made to extend in a straight line - wherein the wave or zigzag shape defines with respect to the zero crossing line (15) crests and troughs formed alternately along the main extent, with the amplitude A_{Q}, which forms the distance of the extreme values (17, 18) of the wave or zigzag shape from the first zero crossing line (15), wherein the extreme values (17) formed in two crests formed one behind the other in the main direction of extent (g) and the extreme values (18) formed in two troughs formed one behind the other in the main direction of extent are respectively formed at a distance from one another of the length L_{Q} with 5 mm ≤ L_{Q} ≤ 15 mm, and wherein the wave or zigzag shape of the sipe (6) is formed with the zero crossing line (16) of its wave-or zigzag-shaped path aligned in the main direction of extent - in particular made to extend in a straight line - wherein the wave or zigzag shape defines with respect to the zero crossing line (16) crests and troughs formed alternately along the main extent, with the amplitude A_{F}, which forms the distance of the extreme values (19, 20) of the wave or zigzag shape from the first zero crossing line (16), wherein the extreme values (19) formed in two crests formed one behind the other in the main direction of extent (h) and the extreme values (20) formed in two troughs formed one behind the other in the main direction of extent (h) are respectively formed at a distance from one another of the length L_{F} with 5 mm ≤ L_{F} ≤ 15 mm.

9. Tread profile according to the features of one of the preceding claims,
wherein the amplitude A_{F} of the sipe (6) in the radially outer surface (7) is formed with 1.5 mm ≤ A_{F} ≤ 8 mm.

10. Tread profile according to the features of one of the preceding claims,
wherein the amplitude A_{Q} of the transverse groove (5) in the groove base (8) is formed with 2 mm ≤ A_{Q} ≤ 6 mm.

## Revendications

1. Profil de bande de roulement d'un pneu de véhicule, en particulier d'un pneu de véhicule utilitaire, comprenant au moins une rangée de blocs profilés (1) qui est limitée dans la direction axiale A du pneu par deux rainures périphériques (2, 3) et qui est réalisée dans la direction périphérique U du pneu à partir d'éléments de blocs profilés (4) disposés les uns derrière les autres et espacés les uns des autres à chaque fois par des rainures transversales (5), les éléments de blocs profilés (4) étant limités dans la direction radiale R vers l'extérieur par une surface (7) radialement extérieure formant une surface de contact avec le sol, un élément de bloc profilé (4) étant disposé entre deux rainures transversales (5) adjacentes dans la direction périphérique U et étant limité par celles-ci dans la direction périphérique U du pneu, à chaque fois au moins une fine entaille (6) s'étendant transversalement étant réalisée dans la surface radialement extérieure (7) de l'élément de bloc profilé (4), la fine entaille (6) étant limitée dans la direction radiale R vers l'intérieur à chaque fois par un fond de fine entaille (11) et chacune des deux rainures transversales (5) étant limitée dans la direction radiale R vers l'intérieur à chaque fois par un fond de rainure (8),
**caractérisé en ce que**
les deux rainures transversales (5) présentent, le long de leur direction d'étendue principale, de la rainure périphérique (2) à la rainure périphérique (3), au moins dans une portion (c_{Q}) de leur étendue, une allure en forme de zigzag ou de forme ondulée, l'amplitude A_{Q} de la forme en zigzag ou de la forme ondulée présentant son maximum dans le fond de rainure (8) et diminuant en continu à partir du fond de rainure (8) le long de l'étendue radiale R vers l'extérieur jusqu'à la surface radialement extérieure (7) et **en ce qu'**au moins une fine entaille (6) de l'élément de bloc profilé (4) s'étendant transversalement présente au moins dans une portion (c_{F}) de son étendue le long de sa direction d'étendue principale de la rainure périphérique (2) à la rainure périphérique (3) une allure en forme de zigzag ou de forme ondulée, l'amplitude (A_{F}) de la forme en zigzag ou de la forme ondulée présentant son maximum dans la surface radialement extérieure (7) et diminuant en continu vers l'intérieur à partir de la surface radialement extérieure (7) le long de l'étendue radiale (R).

2. Profil de bande de roulement selon les caractéristiques de la revendication 1,
dans lequel l'amplitude A_{F} de la forme en zigzag ou de la forme ondulée de la fine entaille (6) dans le fond de la fine entaille (11) est réalisée de telle sorte que A_{F} = 0 mm.

3. Profil de bande de roulement selon les caractéristiques de la revendication 1 ou 2,
dans lequel l'amplitude A_{Q} de la forme en zigzag ou de la forme ondulée de la rainure transversale (5) dans la surface radialement extérieure (7) est réalisée de telle sorte que A_{Q} = 0 mm.

4. Profil de bande de roulement selon les caractéristiques de l'une quelconque des revendications précédentes,
dans lequel l'amplitude A_{F} de la forme en zigzag ou de la forme ondulée de la fine entaille (6) diminue en continu vers l'intérieur jusqu'à son minimum à partir de la surface radialement extérieure (7) le long de l'étendue radiale R.

5. Profil de bande de roulement selon les caractéristiques de l'une quelconque des revendications précédentes,
dans lequel au moins l'une, en particulier les deux, des deux rainures transversales (5) limitant l'élément de bloc profilé (4) et la fine entaille (6) réalisée dans la surface radialement extérieure (7) de l'élément de bloc profilé (4) avec la direction d'étendue principale de son allure d'étendue principale (g, h) réalisée dans la surface radialement extérieure (7), sont orientées parallèlement les unes aux autres.

6. Profil de bande de roulement selon les caractéristiques de l'une quelconque des revendications précédentes,
dans lequel les rainures transversales (5) limitant l'élément de bloc profilé (4) et la fine entaille (6) dans la surface radialement extérieure (7) sont réalisées à chaque fois avec une allure d'étendue principale (g, h) orientée en formant un angle d'inclinaison α avec la direction axiale A du pneu, de telle sorte que l'on ait 20° ≤ α ≤ 45°, en particulier α = 30°.

7. Profil de bande de roulement selon les caractéristiques de l'une quelconque des revendications précédentes,
dans lequel la longueur d'étendue c_{Q} de ladite portion (c_{Q}) de l'étendue de la rainure périphérique est réalisée de telle sorte que l'on ait (0,98a_{Q}) ≤ c_{Q} ≤ a_{Q}, en particulier c_{Q} = a_{Q}, a_{Q} étant la longueur d'étendue maximale de la rainure transversale (5) mesurée le long de la direction d'étendue principale de la rainure transversale (5), et la longueur d'étendue c_{F} de l'étendue de ladite portion (c_{F}) de l'étendue de la fine entaille étant réalisée de telle sorte que l'on ait (0,98a_{F}) ≤ c_{F} ≤ a_{F}, en particulier c_{F} = a_{F}, a_{F} étant la longueur d'étendue maximale de la fine entaille (6) mesurée le long de la direction d'étendue principale de la fine entaille (6).

8. Profil de bande de roulement selon les caractéristiques de l'une quelconque des revendications précédentes,
dans lequel la forme ondulée ou la forme en zigzag des rainures transversales (5) est réalisée avec une ligne de passage par zéro (15) de son allure de forme ondulée et/ou en zigzag orientée dans la direction d'étendue principale (g), en particulier s'étendant en ligne droite, la forme ondulée ou en zigzag définissant, par rapport à la ligne de passage par zéro (15), des sommets et des vallées réalisés en alternance le long de l'étendue principale, avec l'amplitude A_{Q}, qui forme la distance des valeurs extrêmes (17, 18) de la forme ondulée ou de la forme en zigzag à la première ligne de passage par zéro (15), les valeurs extrêmes (17) réalisées dans la direction d'étendue principale (g) dans deux sommets réalisés de manière successive et les valeurs extrêmes (18) réalisées dans la direction d'étendue principale dans deux vallées réalisées de manière successive étant réalisées à chaque fois à une distance de longueur L_{Q} les unes des autres, avec 5 mm ≤ L_{Q} ≤ 15 mm, et la forme ondulée ou la forme en zigzag de la fine entaille (6) étant réalisée avec une ligne de passage par zéro (16) de son allure de forme ondulée ou en zigzag orientée dans la direction d'étendue principale, en particulier s'étendant en ligne droite, la forme ondulée ou en zigzag définissant, par rapport à la ligne de passage par zéro (16), des sommets et des vallées réalisés en alternance le long de l'étendue principale, avec l'amplitude A_{F}, qui forme la distance des valeurs extrêmes (19, 20) de la forme ondulée ou en zigzag à la première ligne de passage par zéro (16), les valeurs extrêmes (19) réalisées dans la direction d'étendue principale (h) dans deux sommets réalisés de manière successive et les valeurs extrêmes (20) réalisées dans la direction d'étendue principale (h) dans deux vallées réalisées de manière successive étant à chaque fois réalisées à une distance de longueur L_{F} les unes des autres, avec 5 mm ≤ L_{F} ≤ 15 mm.

9. Profil de bande de roulement selon les caractéristiques de l'une quelconque des revendications précédentes,
dans lequel l'amplitude A_{F} de la fine entaille (6) dans la surface radialement extérieure (7) est réalisée de telle sorte que l'on ait 1,5 mm ≤ A_{F} ≤ 8 mm.

10. Profil de bande de roulement selon les caractéristiques de l'une quelconque des revendications précédentes,
dans lequel l'amplitude A_{Q} de la rainure transversale (5) dans le fond de rainure (8) est réalisée de telle sorte que l'on ait 2 mm ≤ A_{Q} ≤ 6 mm.
